# FASCICULE DE BREVET EUROPEEN

(11) **EP 3 418 595 B1**
(45) Date de publication et mention de la délivrance du brevet: **05.08.2020**
(21) Numéro de dépôt: 18176688.2
(22) Date de dépôt: 08.06.2018
(51) Int. Cl.: F16C 19/16, F16C 27/06, F16C 33/58, F16C 33/60, G04B 31/02, G04B 5/04, G04B 5/18

(54) **ROULEMENT À BILLES DE PIÈCE D'HORLOGERIE**
UHRENKUGELLAGER
HOROLOGY BALL BEARING

(30) Priorité: 19.06.2017 CH 7892017
(43) Date de publication de la demande: 26.12.2018
(73) Titulaire: MPS Micro Precision Systems AG, 2504 Biel/Bienne (CH)
(72) Inventeur: Laager, Alain, 2610 St-Imier (CH); Matthey, Yanick, 2905 Courtedoux (CH)
(74) Mandataire: P&TS SA (AG, Ltd.)

(56) Documents cités:
- WO-A1-2016/092114
- CH-A- 244 128
- CH-A2- 704 012
- DE-C- 865 124
- US-A1- 2017 114 833

## Description

### Domaine technique

La présente invention concerne un roulement à billes pour pièce d'horlogerie et un mouvement comprenant ledit roulement à billes. L'invention concerne également un procédé de fabrication d'un roulement selon l'invention, une suspension de masse oscillante comprenant un roulement selon l'invention ainsi qu'un mouvement pour montre automatique comprenant une telle suspension.

### Etat de la technique

Dans les mouvements de montre automatique, la rotation de la masse oscillante permet d'armer le ressort du barillet pour fournir de l'énergie au mouvement. Le mouvement de rotation de la masse oscillante est effectué grâce à un roulement à billes.

La rotation des billes sur les zones de roulage génère des vibrations sous forme d'ondes acoustiques qui se propagent favorablement dans les matériaux durs comme les métaux. Généralement, le roulement est fixé sur la platine ou le pont par une ou des vis. Ainsi, les vibrations se propagent depuis la bague intérieure au travers de la fixation vers les autres composants du mouvement horloger qui propagent les vibrations sonores à l'intérieur de la boîte.

Ces vibrations peuvent également être ressenties par le porteur de la montre puisque certaines vibrations sont émises à des fréquences audibles.

On connait des dispositifs anti-vibrations appelés « silent blocks » (marque déposée) qui sont des blocs de matière élastique, typiquement du caoutchouc. Ces silent blocks isolent une machine du sol pour que les vibrations ne soient pas transmises au bâtiment. Les silent blocks sont également utilisés dans le même but dans l'automobile. Cependant, ces dispositifs sont relativement volumineux et n'ont donc pas été employés en horlogerie.

On connait également dans l'automobile des dispositifs antichocs intégrés dans le roulement qui comprennent des fils métalliques compressés. Le document WO2016092114 décrit un roulement pour transmission d'automobile de ce type. Cependant, ces dispositifs ne sont pas employés dans l'horlogerie, car leurs dimensions ne sont pas compatibles avec un mouvement d'horlogerie. D'autre part, ces dispositifs ne cherchent pas à remédier aux vibrations acoustiques dues aux roulages des billes.

On connait en outre des roulements à billes sous et sur lesquels des joints toriques ont été placés afin de suspendre élastiquement le roulement entre, par exemple, la tête de vis et le pont. Ces joints toriques n'ont pas de fonction antivibratoire mais sont utilisés pour protéger le roulement des chocs (dispositif antichocs). Dans cette configuration, le roulement est, en général, centré sur le pied-vis ou par l'intermédiaire d'un diamètre de centrage ce qui propagera les vibrations dans le mouvement.

Par exemple, un dispositif antichoc est décrit dans le document CH704012. Ce document décrit un roulement à billes selon le préambule de la revendication 1 pour une masse oscillante comprenant une bague intérieure et une bague extérieure. Le roulement est monté sur la platine du mouvement en insérant la bague intérieure autour d'un tenon chassé sur un canon du mouvement. La position axiale de la bague intérieure est maintenue grâce à un premier joint torique entre la bague intérieure et la tête du tenon, et un deuxième joint torique entre la bague intérieure et la platine. Les joints toriques servent d'antichoc afin d'absorber les déplacements de la masse et du roulement selon l'axe de rotation du roulement. Le jeu entre le tenon et la bague intérieure du roulement est très faible, de l'ordre de quelques centièmes de mm, en sorte que ces deux composants sont mis en contact au moins lors de chocs. Les vibrations sonores causées par le frottement des billes sont alors transmises de manière intermittente au reste du mouvement. Il en résulte un sifflement intermittent qui est presque encore plus gênant qu'un bruit continu. Par ailleurs, le montage du roulement autour du tenon est délicat. Le bruit dépend des tolérances de fabrication de ces deux éléments, ainsi que de celles du joint, et n'est donc pas maitrisé par le fabricant du roulement à billes.

Ainsi, il existe un besoin de fournir un roulement à billes pour pièce d'horlogerie qui permette d'atténuer les vibrations sonores dans un mouvement, indépendamment de la façon dont ce roulement est monté.

### Bref résumé de l'invention

Un but de la présente invention est de proposer un roulement à billes qui permette de lutter contre la propagation des vibrations générées par le roulement vers les autres composants du mouvement, en particulier les vibrations générées par le déplacement des billes.

Selon l'invention, ce but est atteint notamment au moyen d'un roulement à billes de pièce d'horlogerie selon la revendication 1.

Dans un roulement à billes, le déplacement des billes génère des vibrations qui se propagent à travers la bague extérieure et la bague intérieures vers l'axe de rotation du roulement. La solution selon la présente invention présente notamment l'avantage par rapport à l'art antérieur de fournir un roulement dans lequel la propagation des vibrations est interrompue.

Cette solution permet de réaliser un roulement à billes qui intègre directement l'amortisseur de vibrations. La qualité de l'amortissement ne dépend donc pas du montage du roulement dans le mouvement, ni des tolérances de pièces externes au roulement.

Le roulement intégrant son amortisseur et les deux parties de la bague intérieure forme un ensemble qui peut être déplacé et assemblé sans se démonter; tous les éléments du mouvement assemblé tiennent ensemble, même lorsque le roulement n'est pas monté dans le mouvement. Le roulement à billes forme ainsi un système indépendant qui peut être fabriqué, distribué, stocké et assemblé sans se démonter, même en cas de chocs.

Avantageusement, le roulement selon l'invention est d'un seul tenant: l'utilisateur qui souhaite monter un roulement qui comporte un amortisseur peut le faire en utilisant uniquement un roulement selon la présente invention, sans avoir besoin d'autre pièce d'amortissement. Il visse le roulement sur la platine ou le pont du mouvement, sans avoir besoin de positionner par exemple un joint au préalable ou après le montage du roulement.

La partie de la bague intérieure de plus grand diamètre sera appelée la bague intermédiaire. La partie de plus petit diamètre sera appelée la bague centrale.

La distance entre la paroi externe de la bague centrale et la paroi interne de la bague intermédiaire est de préférence supérieure ou égale à 10 microns, afin d'assurer que ces deux parties ne se touchent jamais, même en cas de chocs.

L'amortisseur est de préférence engagé dans un logement usiné dans la paroi interne de la bague intermédiaire et dans la paroi externe de la bague centrale.

L'amortisseur assure un espacement continu entre la bague centrale et la bague intermédiaire. En d'autres termes, il n'y a jamais de contact entre la bague intermédiaire et la bague centrale, quel que soit le mouvement dans lequel ce roulement est monté. Il y a toujours un écartement (ou espace) entre la bague centrale et la bague intérieure tout le long du pourtour de la bague centrale. L'amortisseur est positionné dans cet écartement. L'espace (ou espacement) n'est pas forcément constant, il peut arriver que l'amortisseur soit plus fortement comprimé sur une portion et moins comprimé sur une autre portion.

Dans un mode de réalisation, la présence de l'amortisseur empêche une extraction de la bague intermédiaire et de la bague centrale, que le roulement soit monté dans un mouvement ou pris isolément.

Dans un mode de réalisation, la bague centrale est clipsée dans la bague intermédiaire par déformation élastique de l'amortisseur; alternativement la bague intermédiaire est clipsée sur la bague centrale par déformation élastique de l'amortisseur. Le terme « clipsé » signifie engager en force. Pour clipser la bague centrale dans la bague intermédiaire (première alternative de ce mode de réalisation), l'utilisateur exerce une pression sur la bague centrale ce qui comprime l'amortisseur entre la bague centrale et la bague intermédiaire. Lorsque la pression sur l'amortisseur est suffisante pour que l'amortisseur s'engage dans le logement, la bague centrale se clipse dans la bague intermédiaire. Ce raisonnement s'applique mutatis mutandis lorsque la bague intermédiaire est clipsée sur la bague centrale (deuxième alternative de ce mode de réalisation).

Dans un autre mode de réalisation, le matériau amortisseur est coulé ou injecté par surmoulage entre la bague centrale et la bague intermédiaire.

Selon un mode de réalisation, la paroi externe de la bague centrale et la paroi interne de la bague intermédiaire comprennent chacune au moins une gorge en vis-à-vis pour délimiter ledit logement. La gorge peut avoir différentes sections, par exemple une section en U, en U avec des bords évasés, en portion de cercle, etc...

Dans un mode de réalisation, le diamètre de la bague centrale est compris 0.0 mm et 50 mm, de préférence entre 2 mm et 10 mm, préférentiellement entre 2,1 et 2,7 mm.

Selon un mode de réalisation, le diamètre de la bague intermédiaire est compris entre 3,0 et 3,2 mm.

Dans un mode de réalisation, le diamètre extérieur de la bague extérieure est compris entre 6.88 et 6,89 mm

Dans un mode de réalisation, le diamètre intérieur du roulement est compris entre 2 mm et 10 mm, préférentiellement entre 2,1 mm et 2,7 mm, et dans lequel le diamètre extérieur du roulement est compris entre 2 mm et 10 mm, préférentiellement entre 6.5 mm et 7.5 mm.

Dans le domaine des roulements à billes, le diamètre intérieur correspond au diamètre intérieur de la bague intérieure, prévu pour le passage de la vis/du pied vis. Le diamètre intérieur correspond au diamètre intérieur de la bague centrale quand le roulement comprend une bague centrale. Le diamètre extérieur du roulement correspond au diamètre extérieur de la bague extérieure.

Dans un mode de réalisation, la bague intérieure peut comporter plusieurs trous de passage de vis, par exemple 3 trous de passage de vis. Dans ce cas, la bague intérieure peut avoir un diamètre intérieur de 0 mm.

Selon un mode de réalisation, l'amortisseur est constitué de matière choisie parmi les polymères élastomères, de préférence du caoutchouc par exemple les caoutchoucs EPDM, les matières plastiques, de préférence les matières thermoplastiques, les résines époxyde, les résines polyuréthane.

Les bagues intérieure et extérieure du roulement selon l'invention peuvent être réalisées en métal, en acier ou en alliage d'aciers, en alliage cuivreux, ou en céramique.

Selon un mode de réalisation, les billes sont en métal, en alliage ou en céramique, par exemple en zircone.

Dans un mode de réalisation, le roulement comprend une cage. La cage permet de contrôler l'espacement des billes dans le chemin de roulement.

Dans un mode de réalisation, chaque bille est maintenue entre la bague intérieure et la bague extérieure par au moins trois points de contact, de préférence quatre points de contact. Lorsque chaque bille est maintenue par quatre points de contact, cela permet d'améliorer la stabilité axiale du roulement.

Selon un mode de réalisation, le roulement présente un axe de rotation A, la bague centrale, la bague intermédiaire et l'amortisseur possèdent chacun une face visible et une face d'appui opposée à ladite face visible, la face visible désignant la face au regard de l'utilisateur lorsque le roulement est fixé à une pièce d'horlogerie, l'amortisseur comprend une surépaisseur sur la face d'appui, de façon à ce que la face d'appui de l'amortisseur soit décalée par rapport à la face d'appui de la bague centrale et la face d'appui de la bague intermédiaire selon l'axe A, la surépaisseur représentant de préférence entre 0.1 % et 0.5 % de l'épaisseur de l'amortisseur selon l'axe A.

Par exemple, la surépaisseur de l'amortisseur recouvre partiellement la face d'appui de la bague intermédiaire ou de la bague centrale, de préférence la bague intermédiaire. La surépaisseur permet de maintenir une précontrainte entre la bague centrale et la bague intermédiaire lors du montage du roulement. Lorsque le roulement est fixé sur une pièce d'horlogerie, la surépaisseur permet d'interrompre la propagation des vibrations dans une direction selon l'axe A. La surépaisseur permet aussi de compenser la perte de volume de la matière injectée lors du refroidissement.

La face d'appui de la bague centrale est destinée à venir en appui sur une pièce d'horlogerie, par exemple un pont ou une platine.

La face d'appui de l'amortisseur peut aussi venir en appui sur une pièce d'horlogerie.

La face d'appui de la bague intermédiaire en revanche ne doit pas venir en appui direct sur la pièce d'horlogerie pour ne pas transmettre les vibrations à ladite pièce.

Selon un mode de réalisation le roulement présente un axe de rotation A, la bague centrale, la bague intermédiaire et l'amortisseur possèdent chacun une face visible et une face d'appui opposée à ladite face visible, la face visible désignant la face au regard de l'utilisateur lorsque le roulement est fixé à une pièce d'horlogerie, et dans lequel la face visible de l'amortisseur est alignée avec la face visible de la bague intermédiaire selon un axe B perpendiculaire à l'axe A. Lorsque la face visible de l'amortisseur et celle de bague intermédiaire sont alignées, cela facilite la fabrication, notamment cela permet de simplifier le design du moule. Cela permet aussi d'obtenir une face visible lisse, uniforme, autrement dit plate entre l'amortisseur et la bague intermédiaire. Une surface lisse continue entre l'amortisseur et la bague intermédiaire est avantageuse pour l'esthétique du roulement.

Alternativement, la face visible de l'amortisseur déborde ou est en retrait par rapport à celle de la bague intermédiaire.

Dans un mode de réalisation, le roulement présente un axe de rotation A, l'amortisseur comprend une base et une protrusion, la protrusion s'étendant depuis la base selon l'axe A, la base étant maintenue entre la bague centrale et la bague intermédiaire, la protrusion étant au contact uniquement de la bague intermédiaire. Dans ce mode de réalisation, la bague centrale et la bague intermédiaire sont décalées selon l'axe A, par exemple la bague centrale est plus basse que la bague intermédiaire. Alternativement, la bague centrale présente une épaisseur, selon l'axe A, inférieure à celle de la bague intermédiaire.

Dans ce mode de réalisation, lorsque la bague centrale est montée dans la bague intermédiaire, il existe un volume délimité par le plan passant par la face visible de la bague centrale et le plan passant par la face visible de la bague centrale. Ainsi, au niveau de la protrusion, l'amortisseur court le long de la paroi interne de la bague intermédiaire, mais n'est pas au contact de la paroi de la bague centrale. Lorsque le roulement est fixé par exemple par une vis, la protrusion peut être intercalée entre la bague intermédiaire et la tête de vis. De préférence, la protrusion est agencée pour éviter le contact avec la tête de vis.

La protrusion, ou extension, désigne la partie de l'amortisseur qui n'est pas maintenue entre la bague centrale et la bague intermédiaire.

Selon un mode de réalisation, l'amortisseur comprend une paroi interne et une paroi externe, la paroi interne étant au regard de la paroi externe de la bague centrale, la paroi externe est au regard de la paroi interne de la bague intermédiaire, la paroi interne de la protrusion de l'amortisseur étant alignée avec la paroi externe de la bague centrale selon un axe C parallèle à l'axe A.

Alternativement, la paroi interne de l'amortisseur peut être décalée, autrement dit non alignée, par rapport à celle de la bague centrale (selon un axe parallèle à l'axe de rotation A).

L'invention concerne également un procédé de fabrication d'un roulement d'horlogerie selon l'invention, le procédé comprenant :
- Fournir une bague intérieure comprenant une bague centrale et une bague intermédiaire, la bague centrale et la bague intermédiaire possèdent chacune une face visible et une face d'appui opposée à ladite face visible, la face visible désignant la face au regard de l'utilisateur lorsque le roulement est fixé à une pièce d'horlogerie,
- Fournir un moule pour former un amortisseur entre la bague centrale et la bague intermédiaire, le moule comprenant une partie supérieure et une partie inférieure opposée à ladite partie supérieure, la partie inférieure comprenant un injecteur pour injecter de la matière entre la partie supérieure et la partie inférieure du moule ;
- Loger la bague centrale et la bague intermédiaire entre la partie supérieure et la partie inférieure du moule en maintenant un espace entre la paroi interne de la bague intermédiaire et la paroi externe de la bague centrale pour former l'amortisseur, ledit espace étant positionné au regard de l'injecteur, la bague centrale et la bague intermédiaire étant calées dans le moule de manière à assurer un contact étanche entre d'une part la partie inférieure du moule et les faces visibles des bagues centrale et intermédiaire, et d'autre part entre la partie inférieure du moule et les faces d'appuis des bagues centrale et intermédiaire ;
- Injecter de la matière depuis l'injecteur dans ledit espace pour former l'amortisseur.

Le procédé de fabrication selon l'invention permet de fabriquer une bague intérieure comprenant un amortisseur. L'amortisseur est logé, au moins partiellement, entre les bagues centrale et intermédiaire pour former un ensemble monobloc. La bague intérieure est ensuite montée dans une bague extérieure pour former le roulement.

Avantageusement, la partie inférieure du moule est de préférence mobile. Les faces visibles des bagues centrale et intermédiaire sont en appui contre la partie supérieure du moule. Puis la partie inférieure du moule se déplace vers les faces d'appuis des bagues centrale et intermédiaire pour maintenir lesdites bagues entre les parties inférieure et supérieure du moule.

Dans un mode de réalisation, le procédé comprend :
- Fournir un moule dont la partie supérieure comprend une portion fixe et une portion mobile;
- Maintenir d'une part la bague centrale entre la portion fixe et la partie inférieure du moule, et d'autre part la bague intermédiaire entre la portion mobile et la partie inférieure du moule, la paroi externe de la portion fixe étant alignée avec la paroi externe de la bague centrale, la paroi interne de la partie mobile étant en appui contre la paroi externe de la partie fixe de manière à assurer un contact étanche entre la portion fixe et la portion mobile;

Dans ce mode de réalisation, le procédé permet de former un amortisseur avec une base et une protrusion. La base est comprise entre la bague centrale et la bague intermédiaire. La protrusion est au contact uniquement de la bague intermédiaire, il n'y a pas de contact avec la bague centrale.

Ce mode de réalisation permet de résoudre des problèmes d'étanchéité qui peuvent se présenter pour fabriquer un roulement avec un amortisseur injecté, en particulier un amortisseur avec une base et une protrusion. Lors de l'injection, qui se fait sous pression, il est important d'assurer une étanchéité continue sur le pourtour de l'espace entre la bague centrale et intermédiaire. La bague centrale et la bague intermédiaire assurent une étanchéité radiale. Les portions mobile et fixe participent également à l'étanchéité radiale : la portion mobile assure une étanchéité sur la bague centrale, la portion mobile assure une étanchéité sur la bague intermédiaire. Le moule assure également une étanchéité selon l'axe A, autrement dit transversale. En particulier, la présence d'une portion mobile et d'une portion fixe qui sont en appui l'une contre l'autre permet d'assurer une étanchéité au niveau de l'angle vif pour former la paroi latérale interne de l'amortisseur.

Selon un mode de réalisation, le procédé comprend :
- Fournir un moule dont la partie inférieure comprend une cavité arrangée pour former un amortisseur présentant une surépaisseur de forme complémentaire à ladite cavité;

La surépaisseur permet de maintenir une contrainte transversale, autrement dit selon l'axe de rotation A, entre la bague centrale et la bague intermédiaire (et par extension sur l'ensemble du roulement). La surépaisseur permet également de compenser la perte de volume de l'amortisseur après refroidissement.

Dans un mode de réalisation non revendiqué, le roulement à billes de pièce d'horlogerie peut être monté suivant le procédé suivant :
i) Monter la bague intermédiaire dans la bague extérieure ou inversement, de façon à disposer les billes entre la bague intérieure et la bague extérieure ;
ii) Engager la bague centrale dans la bague intermédiaire ou inversement, en intercalant l'amortisseur entre la bague centrale et la bague intermédiaire.

Ainsi, le montage du roulement est facilité par rapport au roulement de l'art antérieur.

Dans un mode de réalisation, l'amortisseur est intercalé en clipsant la bague centrale dans la bague intermédiaire par déformation élastique de l'amortisseur ou en clipsant la bague intermédiaire sur la bague centrale par déformation élastique de l'amortisseur. Pour assembler le roulement, la bague centrale est engagée dans la bague intermédiaire, ou la bague intermédiaire est montée sur la bague centrale. L'assemblage des bagues intermédiaire et centrale est facilité par les propriétés élastiques de l'amortisseur qui est déformable par compression. L'amortisseur est comprimé pour être inséré dans le logement et il retrouve ses dimensions après assemblage. L'assemblage peut ainsi se faire par engagement en force, c'est-à-dire par clipsage.

Selon un mode de réalisation, l'amortisseur est intercalé par coulé ou injecté par surmoulage entre la bague centrale et la bague intermédiaire. Ce mode de réalisation est avantageux lorsqu'il s'agit de monter un roulement de petit diamètre, par exemple de 3 mm de diamètre. Pour les petits diamètres, il peut être plus facile de monter des roulements selon l'invention par moulage ou surmoulage que par clipsage.

Selon l'invention, le terme paroi désigne la paroi latérale, c'est-à-dire une paroi orientée selon un axe parallèle à l'axe A.

L'invention concerne aussi une suspension de masse oscillante comprenant un roulement à billes selon l'invention et une masse oscillante.

L'invention concerne en outre un mouvement pour montre automatique comprenant une suspension selon l'invention.

Les modes de réalisations décrits pour le roulement selon l'invention s'appliquent mutatis mutandis au procédé, à la suspension et au mouvement selon l'invention, et vice versa.

### Brève description des figures

Un exemple de modes de réalisation de l'invention est indiqué dans la description illustrée par les figures annexées dans lesquelles :
- La figure 1 illustre une vue en coupe axiale d'un roulement selon un premier mode de réalisation de l'invention ;
- la figure 2 est une vue éclatée de la figure 1 ;
- la figure 3 illustre une vue en coupe axiale d'un roulement selon un deuxième mode de réalisation de l'invention ;
- la figure 4 illustre une vue en coupe axiale d'un roulement selon un troisième mode de réalisation de l'invention ;
- la figure 5 illustre une vue en coupe axiale d'un roulement selon un quatrième mode de réalisation de l'invention ;
- la figure 6 illustre une vue en coupe axiale d'un roulement selon un cinquième mode de réalisation de l'invention ;
- la figure 7 illustre un premier mode de réalisation du procédé selon l'invention ;
- la figure 8 illustre un deuxième mode de réalisation du procédé selon l'invention;

### Exemple(s) de mode de réalisation de l'invention

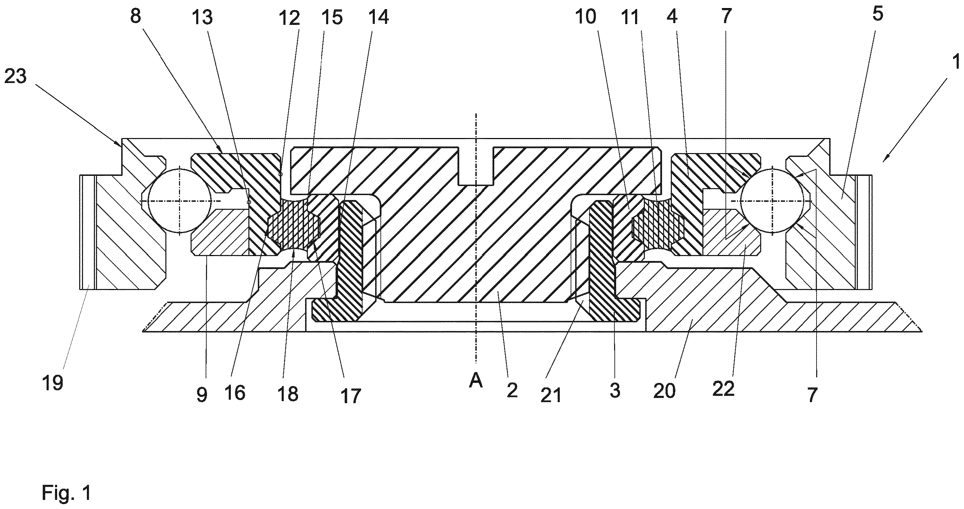

Les figures 1 à 8 représentent plusieurs modes de réalisations du roulement et du procédé selon l'invention. Cependant, l'invention n'est pas limitée à ces modes de réalisations.

Le roulement 1,100,200,300,400 est un roulement pour suspension de masse oscillante. Le roulement 1,100,200,300,400 peut être vissé sur le pont 20 ou sur une platine (non représentée) par une vis 2 insérée dans un pied vis taraudé 3 fixé (chassé) dans le pont 20 ou la platine. Ce pied-vis peut être également usiné directement dans le pont 20 ou dans la platine.

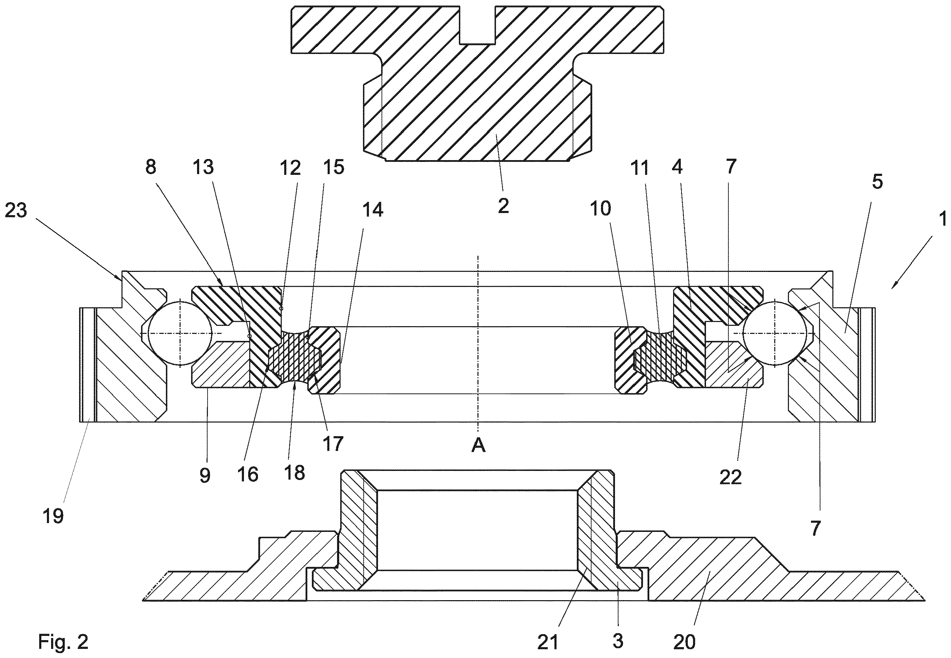

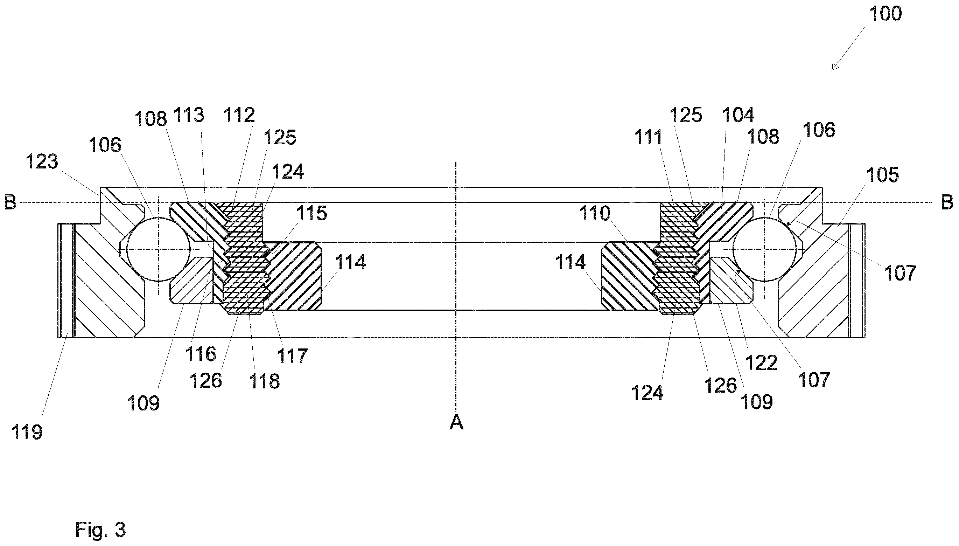

Les figures 3 à 6 représentent d'autres modes de réalisation de roulements selon l'invention. Comme illustré sur les figures 1 et 2, ces autres roulements peuvent aussi être vissés sur un pont ou sur une platine par une vis insérée dans un pied vis taraudé fixé (chassé) dans le pont ou la platine. Ce pied-vis peut être également usiné directement dans le pont ou dans la platine, comme décrit sur la figure 2. Sur les figures 3 à 6, par souci de simplification, la vis, la platine et le canon ou pied vis ne sont pas représentés. La vis, la platine et le canon ou pied vis représentés sur la figure 2 coopèrent avec les roulements décrits sur les figures 3-6 comme représentée sur la figure 2 avec le roulement selon le premier mode de réalisation.

Le roulement 1,100,200,300,400 comprend une bague intérieure 10+11+4+22, 110+111+104+122, 210+211+204+222, 310+311+304+322, 410+411+404+422 engagée dans une bague extérieure 5,105,205,305,405. Les bagues extérieure 5,105,205,305,405 et intérieure 4+22+10 , 110+111+104+122, 210+211+204+222, 310+311+304+322, 410+411+404+422 sont en acier. La bague extérieure 5,105,205,305,405 a un diamètre sur denture de 6.89 mm, le diamètre d'ajustement de la bague intérieure un diamètre de 2,175 mm. Des billes 6,106,206,306,406 sont logées dans le chemin de roulement 7,107,207,307,407 entre la bague intérieure 22+4,122+104,222+204,322+304,422+404 et la bague extérieure 5,105,205,305,405. Les billes 6,106,206,306,406 sont en contact en quatre points de contact avec les bagues. Les billes 6,106,206,306,406 sont en acier ou en céramique.

La bague intérieure 10 + 4, 110+104, 210+204, 310+304, 410+404 est en deux parties concentriques, et comporte ainsi une bague intermédiaire 4,104,204,304,404 et une bague centrale 10,110,210,310,410 de plus petit diamètre. Les billes 6,106,206,306,406 roulent contre la bague intermédiaire 4,104,204,304,404.

La bague intermédiaire 4,104,204,304,404 comprend une partie supérieure 8,108,208,308,408 qui recouvre partiellement les billes 6,106,206,306,406 et le cône 22,122,222,322,422 une partie inférieure 9,109,209,309,409 qui supporte les billes 6,106,206,306,406 lorsque le roulement 1,100,200,300,400 est horizontal. La bague intermédiaire 4,104,204,304,404 et le cône 22,122,222,322,422 sont assemblés par soudage laser, ou chassés.

La bague centrale 10,110,210,310,410 est destinée au centrage et à la fixation du roulement 1,110,210,310,410 sur le mouvement. Le roulement 1,110,210,310,410 est glissé autour du pied-vis 3, solidaire du pont 20 ou de la platine, et est verrouillé axialement par la tête de la vis 2 contre le pont 20 ou la platine.

La bague intérieure 10+4,110+104, 210+204, 310+304, 410+404 comporte en outre un amortisseur annulaire 11,111,211,311,411 entre la bague centrale 10,110,210,310,410 et la bague intermédiaire 4,104,204,304,404. Cet amortisseur 11,111,211,311,411 permet d'absorber les vibrations causées notamment par le roulement des billes 6,106,206,306,406 et d'éviter qu'elles ne soient transmises au mouvement.

L'amortisseur annulaire 11,111,211,311,411 est un anneau déformable élastiquement qui court le long de la bague centrale 10,110,210,310,410. Dans les modes de réalisation des figures 1 à 7, l'amortisseur 11,111,211,311,411 est constitué de caoutchouc.

La bague intermédiaire 4,104,204,304,404 comprend une paroi interne 12,112,212,312,412 orientée vers l'axe de rotation A du roulement et une paroi externe 13,113,213,313,413 orientée vers la bague extérieure 5,105,205,305,405. La bague centrale 10,105,205,305,405 comprend une paroi interne 14,114,214,314,414 orientée vers l'axe de rotation A du roulement et une paroi externe 15,115,215,315,415 orientée vers la bague intérieure 4,104,204,304,404.

Dans le roulement 1,100,200,300,400 selon l'invention, la bague centrale 10,110,210,310,410 est montée dans la bague intermédiaire 4,104,204,304,404, la bague intermédiaire 4,104,204,304,404 est elle-même montée dans la bague extérieure 5,105,205,305,405.

Le roulement 1,100,200,300,400 est d'un seul tenant, c'est-à-dire monobloc, dans le sens où la bague centrale 10,110,210,310,410, l'amortisseur 11,111,211,311,411, les bagues extérieures 5,105,205,305,405 et intermédiaire 22+4,122+104,222+204,322+304,422+404, et les billes 6,106,206,306,406 sont tous solidaires entre eux, ils forment un ensemble d'un seul tenant qui peut être soulevé et même secoué sans se démonter.

Dans les modes de réalisation représentés sur les figures 1 à 7, la bague extérieure 5,105,205,305,405 comprend une denture 19,219,319,419 pour engrener avec les rouages et un diamètre d'ajustement de la masse 23,123,223,323,423 permettant de chasser et sertir la planche de la masse (non représentée). La bague extérieure 5,105,205,305,405 est mobile en rotation pour permettre la rotation de la masse oscillante et l'armement du ressort de barillet du mouvement (non représenté). La bague intermédiaire 4,104,204,304,404 et la bague centrale 10,110,210,310,410 sont-elles fixes et solidaires de la platine ou du pont via la vis 2.

Dans le premier mode de réalisation illustré sur les figures 1 et 2, la paroi externe de la bague centrale 15 et la paroi interne de la bague intermédiaire 12 comprennent chacune une gorge 16, 17 en vis-à-vis pour délimiter un logement 18 dans lequel est inséré l'amortisseur 11. Les gorges 16, 17 sont usinées dans les parois. Les gorges permettent de garantir une accroche de l'amortisseur dans le logement, de façon à maintenir l'amortisseur dans le logement. Les gorges 16 17 ont une section de forme polygonale.

Dans le deuxième mode de réalisation illustré sur la figure 3, la paroi externe de la bague centrale 115 et la paroi interne de la bague intermédiaire 112 comprennent chacune quatre gorges 116, 117. Les gorges 116, 117 sont usinées dans les parois. Les gorges 116 117 ont une section de forme triangulaire. Les gorges 116,117 forment une denture avec une alternance de pointes et de creux.,

Dans le deuxième mode de réalisation, l'amortisseur 111 comprend une base 124 et une protrusion 125. L'amortisseur 11 comprend en outre une surépaisseur 126 qui recouvre partiellement la bague intermédiaire 104.

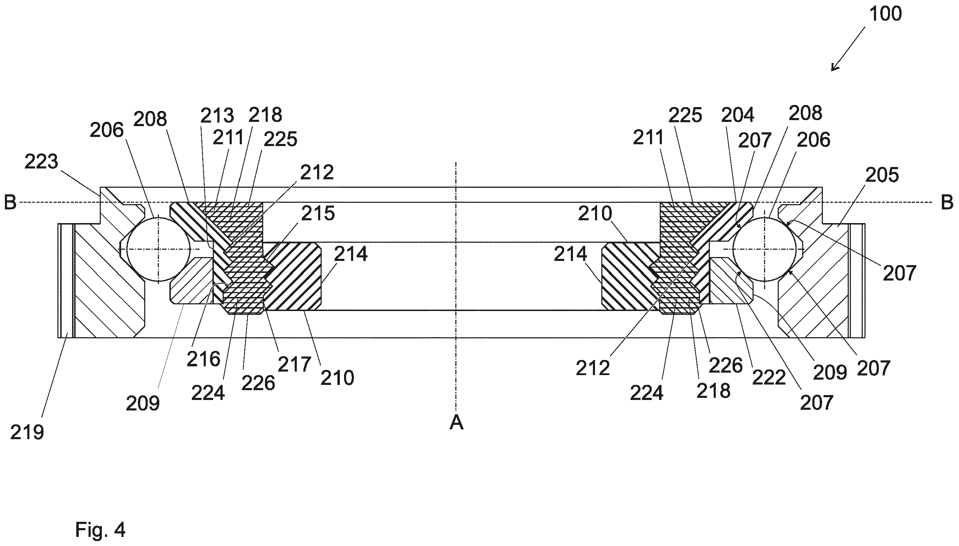

Dans le troisième mode de réalisation illustré sur la figure 4, la paroi externe de la bague centrale 215 et la paroi interne de la bague intermédiaire 212 comprennent chacune deux gorges 216, 217. Les gorges 216, 217 sont usinées dans les parois. Les gorges 216,217 ont une section de forme triangulaire. Comme pour le deuxième mode de réalisation, les gorges forment une denture mais le nombre de dents est inférieur à celui du deuxième mode de réalisation.

Dans ce mode de réalisation, l'amortisseur 211 comprend une base 224 et une protrusion 125. L'amortisseur 211 comprend en outre une surépaisseur 226 qui recouvre partiellement la bague intermédiaire 204.

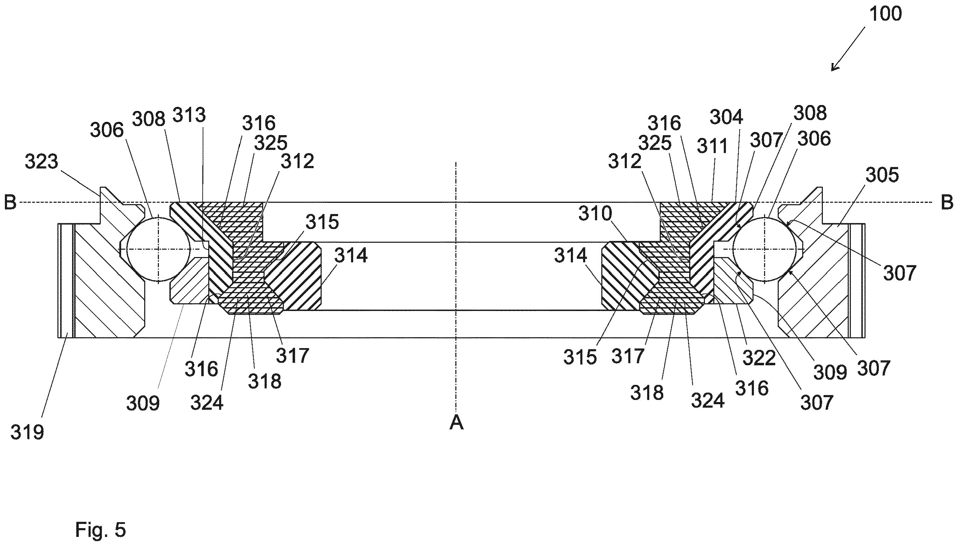

Dans le quatrième mode de réalisation illustré sur la figure 5, le logement 318 dans lequel est inséré l'amortisseur 311 est défini par des portions obliques de paroi externe de la bague centrale 315 et la paroi interne de la bague intermédiaire 312 qui forment des gorges 316, 317. La paroi externe de la bague centrale 315 a une section en cône, comprenant une portion plate encadrée par deux portions obliques définissant les gorges 317, le cône pointant vers la paroi interne de la bague intermédiaire. La paroi interne de la bague intermédiaire présente une portion plate encadrée par deux portions obliques délimitant les gorges 416.

Dans ce quatrième mode de réalisation, l'amortisseur 311 comprend une base 324 et une protrusion 325.

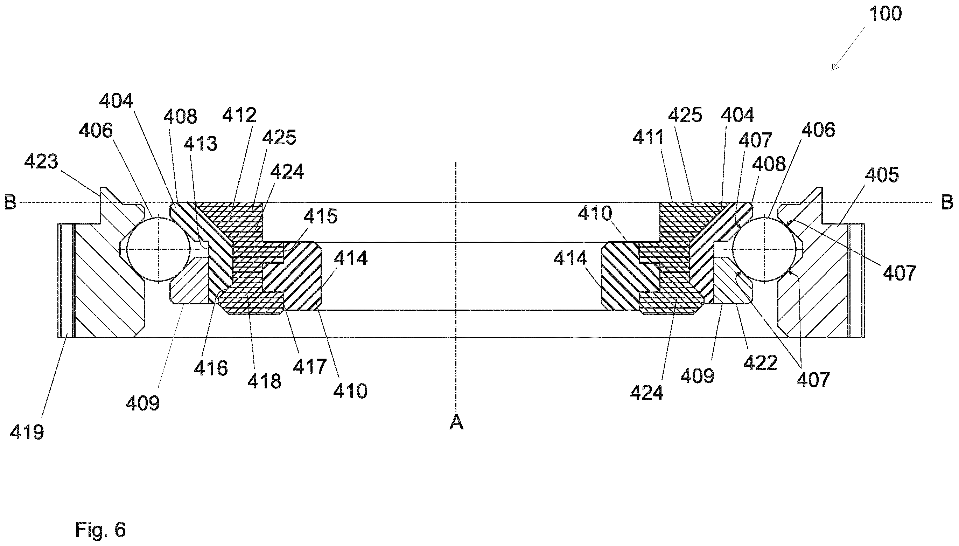

Dans le cinquième mode de réalisation illustré sur la figure 6, la paroi interne de la bague intermédiaire 416 a le même profil que dans le quatrième mode de réalisation. La paroi externe de la bague centrale 415 comprend une dent au profil carré encadré de deux gorges 416.

Dans ce cinquième mode de réalisation, l'amortisseur 411 comprend une base 424 et une protrusion 425.

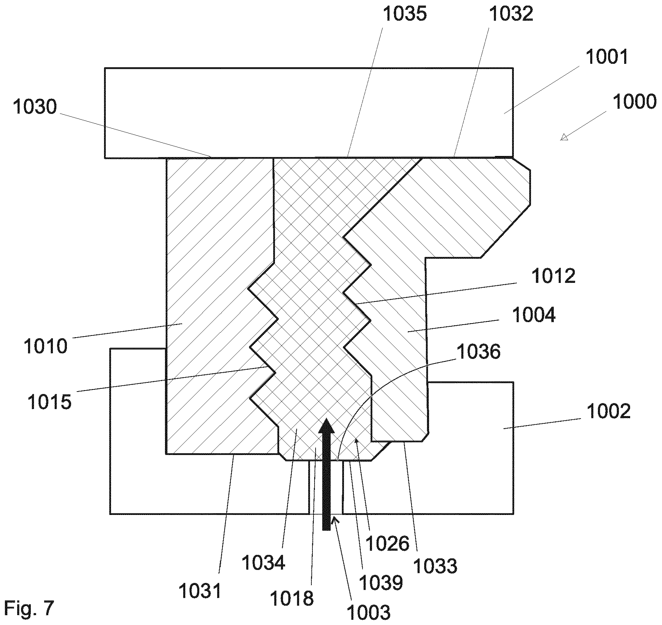

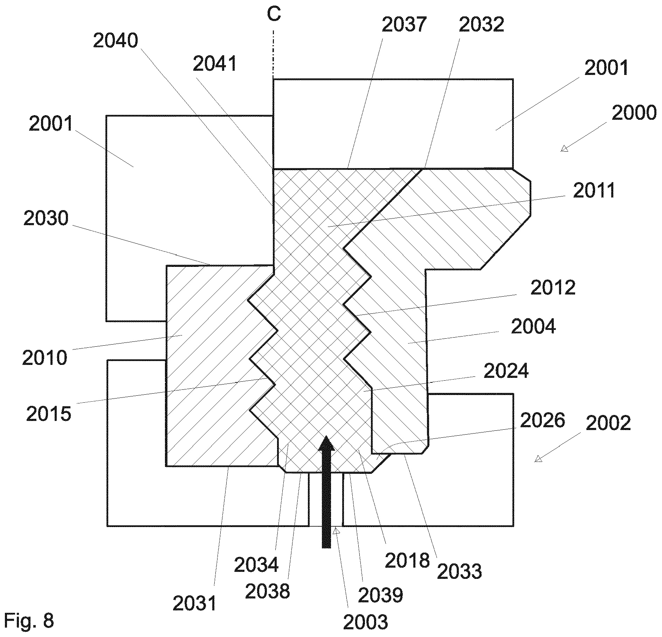

Les figures 7 et 8 représentent deux modes de réalisation du procédé selon l'invention. Mais le procédé selon l'invention n'est pas limité à ces modes de réalisation.

Le procédé illustré sur la figure 7 permet de fabriquer un roulement ou la bague centrale et la bague intermédiaire maintiennent l'amortisseur sur toute son épaisseur (selon l'axe A). Par exemple, ce procédé permet de fabriquer un roulement illustré sur les figures 1 et 2.

Le procédé illustré sur la figure 8 permet de fabriquer un roulement avec un amortisseur comprenant une base et une protrusion, la base étant maintenue entre la bague centrale et la bague intermédiaire (selon l'axe A), la protrusion étant uniquement au contact de la bague intermédiaire. Lorsque le roulement n'est pas fixé, par exemple par une vise, la protrusion est uniquement au contact de la bague intermédiaire. Lorsque le roulement est fixé, l'amortisseur peut être maintenu entre la tête de vis et la bague intermédiaire. Par exemple, ce procédé permet de fabriquer des roulements illustrés sur les figures 3 à 6.

Le procédé selon l'invention utilise un moule 1000,2000 comprenant une partie supérieure 1001,2001 et une partie inférieure 1002,2002. La partie inférieure 1001,2001 comprend un injecteur 1003,2003 connecté à une source de matière (non représenté).

Une bague intérieure comprenant une bague centrale 1010,2010 et une bague intermédiaire 1004,2004 est positionnée entre la partie supérieure 1001,2001 et la partie inférieure 1002,2002. La bague centrale 1010,2010 et la bague intermédiaire 1004,2004 comprennent une face visible 1030,2030 au contact de la partie supérieure 1001,2001, et une face d'appui 1031,2031 au contact de la partie inférieure 1002,2002. Le contact est étanche pour éviter les fuites de matière lors de l'injection.

Il y a un espace entre la bague centrale 1010,2010 et la bague intermédiaire 1004,2004. Cet espace 1034,2034 est positionné au regard de l'injecteur 1003,2003, puisque cet espace 1034,2034 délimite le logement 1018,2018 qui va accueillir la matière de l'injecteur pour former l'amortisseur 1011,2011.

Une fois que les bagues centrales 1010,2010 et intermédiaires 1004,2004 sont maintenues dans le moule, la matière est injectée depuis l'injecteur 1003,2003 pour remplir le logement 1018,2018.

Après refroidissement, la bague intérieure est démoulée. L'excédent de matière se trouvant dans l'injecteur forme une carotte qui est cassée ou découpée.

Sur la figure 8, la partie supérieure 2001 comprend une portion fixe 2035 et une portion mobile 2036. La portion fixe 2035 s'appuie sur la face visible 2030 de la bague centrale 2010, alors que la portion mobile 2036 s'appuie sur la face visible 2032 de la bague intermédiaire 2004. La portion fixe 2035 est également en appui sur la portion mobile 2036. Ces appuis permettent de garantir l'étanchéité sur la partie supérieure 2001 du moule 2000.

Pour la partie inférieure 2002, la portion fixe 2035 s'appuie sur la face d'appui 2031 de la bague centrale 2010, alors que la portion mobile 2036 s'appuie sur la face d'appui 2033 de la bague intermédiaire 2004. La portion fixe 2035 est également en appui sur la portion mobile 2036. Ces appuis permettent de garantir l'étanchéité sur la partie supérieure 2001 du moule 2000.

La partie inférieure 2002 est mobile et vient en appui sur les faces d'appuis 2031,2033 des bagues centrale 2010 et intermédiaire 2004 pour assurer une étanchéité sur la partie inférieure 2001 du moule 2000.

La paroi externe de la portion fixe est alignée selon un axe parallèle C à l'axe A (axe de rotation) avec la paroi externe de la bague central 2015. Ainsi, la protrusion 2025 de l'amortisseur 2011 présente un bord droit selon l'axe A et un angle vif 2040 à la jonction entre ce bord droit et la face visible 2037 de l'amortisseur.

La partie inférieure 2001 comprend une cavité 2039 pour former une surépaisseur 2026 sur la base 2024 de l'amortisseur 2011.

### Numéros de référence employés sur les figures

- A: Axe de rotation du roulement
- 1: Roulement à billes selon un premier mode de réalisation
- 2: Vis
- 3: Canon ou pied vis
- 4: Bague intermédiaire
- 5: Bague extérieure
- 6: Billes
- 7: Chemin de roulement
- 8: Partie supérieure de la bague intérieure
- 9: Partie inférieure de la bague intérieure
- 10: Bague centrale
- 11: Amortisseur annulaire
- 12: Paroi interne de la bague intermédiaire
- 13: Paroi externe de la bague intermédiaire
- 14: Paroi interne de la bague centrale
- 15: Paroi externe de la bague centrale
- 16: Gorge de la bague centrale
- 17: Gorge de la bague intérieure
- 18: Logement
- 19: Denture
- 20: Pont
- 21: Taraudage
- 22: Cône
- 23: Diamètre d'ajustement de la masse

- 100: Roulement à billes selon un deuxième mode de réalisation
- 104: Bague intermédiaire
- 105: Bague extérieure
- 106: Billes
- 107: Chemin de roulement
- 108: Partie supérieure de la bague intérieure
- 109: Partie inférieure de la bague intérieure
- 110: Bague centrale
- 111: Amortisseur annulaire
- 112: Paroi interne de la bague intermédiaire
- 113: Paroi externe de la bague intermédiaire
- 114: Paroi interne de la bague centrale
- 115: Paroi externe de la bague centrale
- 116: Gorge de la bague centrale
- 117: Gorge de la bague intérieure
- 118: Logement
- 119: Denture
- 122: Cône
- 123: Diamètre d'ajustement de la masse
- 124: Base de l'amortisseur
- 125: Protrusion de l'amortisseur
- 126: Surépaisseur l'amortisseur

- 200: Roulement à billes selon un troisième mode de réalisation
- 204: Bague intermédiaire
- 205: Bague extérieure
- 206: Billes
- 207: Chemin de roulement
- 208: Partie supérieure de la bague intérieure
- 209: Partie inférieure de la bague intérieure
- 210: Bague centrale
- 211: Amortisseur annulaire
- 212: Paroi interne de la bague intermédiaire
- 213: Paroi externe de la bague intermédiaire
- 214: Paroi interne de la bague centrale
- 215: Paroi externe de la bague centrale
- 216: Gorge de la bague centrale
- 217: Gorge de la bague intérieure
- 218: Logement
- 219: Denture
- 222: Cône
- 223: Diamètre d'ajustement de la masse
- 224: Base de l'amortisseur
- 225: Protrusion de l'amortisseur
- 226: Surépaisseur l'amortisseur

- 300: Roulement à billes selon un quatrième mode de réalisation
- 304: Bague intermédiaire
- 305: Bague extérieure
- 306: Billes
- 307: Chemin de roulement
- 308: Partie supérieure de la bague intérieure
- 309: Partie inférieure de la bague intérieure
- 310: Bague centrale
- 311: Amortisseur annulaire
- 312: Paroi interne de la bague intermédiaire
- 313: Paroi externe de la bague intermédiaire
- 314: Paroi interne de la bague centrale
- 315: Paroi externe de la bague centrale
- 316: Gorge de la bague centrale
- 317: Gorge de la bague intérieure
- 318: Logement
- 319: Denture
- 322: Cône
- 323: Diamètre d'ajustement de la masse
- 324: Base de l'amortisseur
- 325: Protrusion de l'amortisseur
- 326: Surépaisseur l'amortisseur

- 400: Roulement à billes selon un cinquième mode de réalisation
- 404: Bague intermédiaire
- 405: Bague extérieure
- 406: Billes
- 407: Chemin de roulement
- 408: Partie supérieure de la bague intérieure
- 409: Partie inférieure de la bague intérieure
- 410: Bague centrale
- 411: Amortisseur annulaire
- 412: Paroi interne de la bague intermédiaire
- 413: Paroi externe de la bague intermédiaire
- 414: Paroi interne de la bague centrale
- 415: Paroi externe de la bague centrale
- 416: Gorge de la bague centrale
- 417: Gorge de la bague intérieure
- 418: Logement
- 419: Denture
- 422: Cône
- 423: Diamètre d'ajustement de la masse
- 424: Base de l'amortisseur
- 425: Protrusion de l'amortisseur

- 1000: moule
- 1001: Partie supérieure
- 1002: Partie inférieure
- 1004: Bague intermédiaire
- 1010: Bague centrale
- 1011: amortisseur
- 1012: Paroi interne de la bague intermédiaire
- 1015: Paroi externe de la bague centrale
- 1018: logement
- 1030: Face visible de la bague centrale
- 1031: Face d'appui de la bague centrale
- 1032: Face visible de la bague intermédiaire
- 1033: Face d'appui de la bague intermédiaire
- 1034: espace
- 1035: Face visible de l'amortisseur
- 1036: Face d'appui de l'amortisseur
- 1039: cavité

- 2000: moule
- 2001: Partie supérieure
- 2002: Partie inférieure
- 2004: Bague intermédiaire
- 2010: Bague centrale
- 2011: amortisseur
- 2012: Paroi interne de la bague intermédiaire
- 2015: Paroi externe de la bague centrale
- 2018: logement
- 2030: Face visible de la bague centrale
- 2031: Face d'appui de la bague centrale
- 2032: Face visible de la bague intermédiaire
- 2033: Face d'appui de la bague intermédiaire
- 2034: espace
- 2035: Portion fixe
- 2036: Portion mobile
- 2037: Face visible de l'amortisseur
- 2038: Face d'appui de l'amortisseur
- 2039: cavité
- 2040: Bord droit
- 2041: Angle vif

## Revendications

1. Roulement à billes (1,100,200,300,400) de pièce d'horlogerie, le roulement comprenant une pluralité de billes (6,106,206,306,406), une bague intérieure engagée dans une bague extérieure (5,105,205,305,405), lesdites billes (6,106,206,306,406) étant logées entre la bague intérieure et la bague extérieure (5,105,205,305,405), le diamètre intérieur du roulement est compris entre 0 mm et 50 mm et le diamètre extérieur du roulement est compris entre 1 mm et 50 mm,
la bague intérieure comportant deux parties concentriques désignées première partie et deuxième partie, ladite première partie formant une bague intermédiaire (4,104,204,304,404,1004,2004), ladite deuxième partie formant une bague centrale (10,110,210,310,410,1010,2010), un amortisseur annulaire de vibrations (11,111,211,311,411,1011,2011) étant logé entre ces deux parties, **caractérisé en ce que** la bague centrale (10,110,210,310,410,1010,2010), l'amortisseur annulaire de vibrations (11,111,211,311,411,1011,2011), les bagues extérieure (5,105,205,305,405) et intermédiaire (4,104,204,304,404,1004,2004) et les billes (6,106,206,306,406) dudit roulement à billes sont solidaires entre eux et forment un ensemble d'un seul tenant, l'amortisseur annulaire de vibration empêchant une extraction de la bague intermédiaire (4,104,204,304,404,1004,2004) et de la bague centrale (10,110,210,310,410,1010,2010).

2. Roulement (1,100,200,300,400) selon la revendication 1, la distance entre la paroi externe de la bague centrale (15,215,315,415) et la paroi interne de la bague intermédiaire (12,112,212,312,412) est supérieure ou égale à 10 microns.

3. Roulement (1,100,200,300,400) selon l'une des revendications 1 ou 2, dans lequel l'amortisseur (11,111,211,311,411,1011,2011) est coulé ou injecté par surmoulage entre la bague centrale (10,110,210,310,410,1010,2010) et la bague intermédiaire (4,104,204,304,404,1004,2004).

4. Roulement (1,100,200,300,400) selon l'une des revendications 1 à 3, dans lequel la paroi externe de la bague centrale (15,115,215,315,415) et la paroi interne de la bague intermédiaire (12,112,212,312,412) comprennent chacune au moins une gorge (16,17,116,117,216,217,316,317,416,417) en vis-à-vis pour délimiter un logement (18,118,218,318,418,1018,2018) dans lequel ledit amortisseur (11,111,211,311,411,1011,2011) est logé.

5. Roulement (1,100,200,300,400) selon l'une des revendications 1 à 4, dans lequel l'amortisseur (11,111,211,311,411,1011,2011) est constitué de matière choisie parmi les polymères élastomères, de préférence du caoutchouc par exemple les caoutchoucs EPDM, les matières plastiques, de préférence les matières thermoplastiques, les résines époxyde, les résines polyuréthane.

6. Roulement (1,100,200,300,400) selon l'une des revendications 1 à 5, dans lequel
- le roulement présente un axe de rotation A,
- la bague centrale (10,110,210,310,410,1010,2010), la bague intermédiaire (4,104,204,304,404,1004,2004) et l'amortisseur (11,111,211,311,411,1011,2011) possèdent chacun une face visible (1030,1032,1035,2030,2032,2037) et une face d'appui (1031,1033,1036,2031,2033,2038) opposée à ladite face visible, la face visible désignant la face au regard de l'utilisateur lorsque le roulement est fixé à une pièce d'horlogerie,
- l'amortisseur (11,111,211,311,411,1011,2011) comprend une surépaisseur (126,226,1026,2026) sur la face d'appui, de façon à ce que la face d'appui (2038) de l'amortisseur (2011) soit décalée par rapport à la face d'appui (2031) de la bague centrale et la face d'appui (2033) de la bague intermédiaire selon l'axe A, la surépaisseur (126,226,1026,2026) représentant de préférence entre 0.1 % et 0.5 % de l'épaisseur de l'amortisseur selon l'axe A.

7. Roulement (1,100,200,300,400) selon l'une des revendications 1 à 6, dans lequel
- le roulement présente un axe de rotation A,
- la bague centrale (10,110,210,310,410,1010,2010), la bague intermédiaire (4,104,204,304,404,1004,2004) et l'amortisseur (11,111,211,311,411,1011,2011) possèdent chacun une face visible (1030,1032,1035,2030,2032,2037) et une face d'appui (1031,1033,1036,2031,2033,2038) opposée à ladite face visible, la face visible désignant la face au regard de l'utilisateur lorsque le roulement est fixé à une pièce d'horlogerie,
- et dans lequel la face visible de l'amortisseur (1035,2037) est alignée avec la face visible de la bague intermédiaire (1032,2032) selon un axe B perpendiculaire à l'axe A.

8. Roulement (1,100,200,300,400) selon l'une des revendications 1 à 7, dans lequel
- le roulement présente un axe de rotation A,
- l'amortisseur (111,211,311,411,1011,2011) comprend une base (124,224,324,424,1024,2024) et une protrusion (125,225,325,425,1025,2025), la protrusion (125,225,325,425,1025,2025) s'étendant depuis la base (124,224,324,424,1024,2024) selon l'axe A, la base (124,224,324,424,1024,2024) étant maintenue entre la bague centrale (110,210,310,410,1010,2010) et la bague intermédiaire (104,204,304,404,1004,2004), la protrusion (125,225,325,425,1025,2025) étant au contact uniquement de la bague intermédiaire (104,204,304,404,1004,2004).

9. Roulement (1,100,200,300,400) selon la revendication 8, dans lequel
- l'amortisseur (11,111,211,311,411,1011,2011) comprend une paroi interne et une paroi externe, la paroi interne étant au regard de la paroi externe de la bague centrale (15,115,215,315,415), la paroi externe est au regard de la paroi interne de la bague intermédiaire (12,112,212,312,412),
- la paroi interne de la protrusion de l'amortisseur étant alignée avec la paroi externe de la bague centrale selon un axe C parallèle à l'axe A.

10. Procédé de fabrication d'un roulement d'horlogerie selon l'une des revendications 1 à 9, le procédé comprenant :
- Fournir une bague intérieure comprenant une bague centrale (10,110,210,310,410,1010,2010) et une bague intermédiaire (4,104,204,304,404,1004,2004), la bague centrale et la bague intermédiaire possèdent chacune une face visible (1030,1032,2030,2032) et une face d'appui (1031,1033,2031,2033) opposée à ladite face visible, la face visible désignant la face au regard de l'utilisateur lorsque le roulement est fixé à une pièce d'horlogerie,
- Fournir un moule (1000,2000) pour former un amortisseur (11,111,211,311,411,1011,2011) entre la bague centrale (10,110,210,310,410,1010,2010) et la bague intermédiaire (4,104,204,304,404,1004,2004), le moule (1000,2000) comprenant une partie supérieure (1002,2002) et une partie inférieure (1001,2001) opposée à ladite partie supérieure, la partie inférieure comprenant un injecteur (1003,2003) pour injecter de la matière entre la partie supérieure et la partie inférieure du moule ;
- Loger la bague centrale et la bague intermédiaire entre la partie supérieure et la partie inférieure du moule en maintenant un espace (1034,2034) entre la paroi interne de la bague intermédiaire (1012,2012) et la paroi externe de la bague centrale (1015,2015) pour former l'amortisseur (1011,2011), ledit espace étant positionné au regard de l'injecteur (1003,2003), la bague centrale et la bague intermédiaire étant calées dans le moule de manière à assurer un contact étanche entre d'une part la partie inférieure (1002,2002) du moule et les faces visibles (1030,1032,2030,2032) des bagues centrale et intermédiaire, et d'autre part entre la partie inférieure (1001,2001) du moule et les faces d'appuis (1031,1033,2031,2033) des bagues centrale et intermédiaire ;
- Injecter de la matière depuis l'injecteur dans ledit espace pour former l'amortisseur (1011,2011).

11. Procédé selon la revendication 10, dans lequel le roulement présente un axe de rotation A, le procédé comprend :
- Fournir un moule (2000) dont la partie supérieure (2001) comprend une portion fixe (2035) et une portion mobile (2036) ;
- Maintenir d'une part la bague centrale (2010) entre la portion fixe (2035) et la partie inférieure (2002) du moule, et d'autre part la bague intermédiaire (2004) entre la portion mobile (2036) et la partie inférieure (2002) du moule, la paroi externe de la portion fixe étant alignée avec la paroi externe de la bague centrale (2015), la paroi interne de la partie mobile étant en appui contre la paroi externe de la partie fixe de manière à assurer un contact étanche entre la portion fixe et la portion mobile ;

12. Procédé selon l'une des revendications 10 ou 11, dans lequel le procédé comprend :
- Fournir un moule dont la partie inférieure (1001,2001) comprend une cavité (1039,2039) arrangée pour former un amortisseur présentant une surépaisseur de forme complémentaire à ladite cavité;

13. Suspension de masse oscillante comprenant un roulement à billes (1) selon l'une des revendications 1 à 9 et une masse oscillante.

14. Mouvement pour montre automatique comprenant une suspension selon la revendication précédente.

## Patentansprüche

1. Kugellager (1, 100, 200, 300, 400) für ein Uhrenteil, wobei das Lager eine Vielzahl von Kugeln (6, 106, 206, 306, 406) und einen in einen Außenring (5, 105, 205, 305, 405) eingesetzten Innenring umfasst, wobei die Kugeln (6, 106, 206, 306, 406) zwischen dem Innenring und dem Außenring (5, 105, 205, 305, 405) aufgenommen sind, der Innendurchmesser des Lagers zwischen 0 mm und 50 mm beträgt und der Außendurchmesser des Lagers zwischen 1 mm und 50 mm beträgt,
wobei der Innenring zwei konzentrische Teile beinhaltet, die als erster Teil und zweiter Teil bezeichnet werden, wobei der erste Teil einen Zwischenring (4, 104, 204, 304, 404, 1004, 2004) bildet, wobei der zweite Teil einen Mittelring (10, 110, 210, 310, 410, 1010, 2010) bildet, wobei ein ringförmiger Schwingungsdämpfer (11, 111, 211, 311, 411, 1011, 2011) zwischen diesen beiden Teilen aufgenommen ist, **dadurch gekennzeichnet, dass** der Mittelring (10, 110, 210, 310, 410, 1010, 2010), der ringförmige Schwingungsdämpfer (11, 111, 211, 311, 411, 1011, 2011), der Außenring (5, 105, 205, 305, 405) und der Zwischenring (4, 104, 204, 304, 404, 1004, 2004) und die Kugeln (6, 106, 206, 306, 406) des Kugellagers untereinander fest verbunden sind und eine einteilige Anordnung bilden, wobei der ringförmige Schwingungsdämpfer ein Herausziehen des Zwischenrings (4, 104, 204, 304, 404, 1004, 2004) und des Mittelrings (10, 110, 210, 310, 410, 1010, 2010) verhindert.

2. Lager (1, 100, 200, 300, 400) nach Anspruch 1, wobei der Abstand zwischen der Außenwand des Mittelrings (15, 215, 315, 415) und der Innenwand des Zwischenrings (12, 112, 212, 312, 412) 10 Mikrometer oder mehr beträgt.

3. Lager (1, 100, 200, 300, 400) nach einem der Ansprüche 1 oder 2, bei dem der Dämpfer (11, 111, 211, 311, 411, 1011, 2011) zwischen dem Mittelring (10, 110, 210, 310, 410, 1010, 2010) und dem Zwischenring (4, 104, 204, 304, 404, 1004, 2004) angegossen oder angespritzt ist.

4. Lager (1, 100, 200, 300, 400) nach einem der Ansprüche 1 bis 3, wobei die Außenwand des Mittelrings (15, 115, 215, 315, 415) und die Innenwand des Zwischenrings (12, 112, 212, 312, 412) jeweils mindestens eine Kehle (16, 17, 116, 117, 216, 217, 316, 317, 416, 417) umfassen, die einander gegenüber liegen, um eine Aufnahme (18, 118, 218, 318, 418, 1018, 2018) zu begrenzen, in welcher der Dämpfer (11, 111, 211, 311, 411, 1011, 2011) aufgenommen ist.

5. Lager (1, 100, 200, 300, 400) nach einem der Ansprüche 1 bis 4, bei dem der Dämpfer (11, 111, 211, 311, 411, 1011, 2011) aus einem Material besteht, das unter den elastomerischen Polymeren, bevorzugt Kautschuk, zum Beispiel den EPDM-Kautschuken, den Kunststoffen, bevorzugt den Thermoplasten, den Epoxidharzen, den Polyurethanharzen gewählt ist.

6. Lager (1, 100, 200, 300, 400) nach einem der Ansprüche 1 bis 5, bei dem
- das Lager eine Rotationsachse A aufweist,
- der Mittelring (10, 110, 210, 310, 410, 1010, 2010), der Zwischenring (4, 104, 204, 304, 404, 1004, 2004) und der Dämpfer (11, 111, 211, 311, 411, 1011, 2011) jeweils eine sichtbare Seite (1030, 1032, 1035, 2030, 2032, 2037) und entgegengesetzt zu der sichtbaren Seite eine Auflageseite (1031, 1033, 1036, 2031, 2033, 2038) besitzen, wobei die sichtbare Seite die Seite bezeichnet, die dem Benutzer zugewandt ist, wenn das Lager an einer Uhr befestigt ist,
- der Dämpfer (11, 111, 211, 311, 411, 1011, 2011) eine Überdicke (126, 226, 1026, 2026) auf der Auflageseite umfasst, so dass die Auflageseite (2038) des Dämpfers (2011) in Bezug auf die Auflageseite (2031) des Mittelrings und die Auflageseite (2033) des Zwischenrings entlang der Achse A versetzt ist, wobei die Überdicke (126, 226, 1026, 2026) bevorzugt zwischen 0,1 % und 0,5 % der Dicke des Dämpfers entlang der Achse A ausmacht.

7. Lager (1, 100, 200, 300, 400) nach einem der Ansprüche 1 bis 6, bei dem
- das Lager eine Rotationsachse A aufweist,
- der Mittelring (10, 110, 210, 310, 410, 1010, 2010), der Zwischenring (4, 104, 204, 304, 404, 1004, 2004) und der Dämpfer (11, 111, 211, 311, 411, 1011, 2011) jeweils eine sichtbare Seite (1030, 1032, 1035, 2030, 2032, 2037) und entgegengesetzt zu der sichtbaren Seite eine Auflageseite (1031, 1033, 1036, 2031, 2033, 2038) besitzen, wobei die sichtbare Seite die Seite bezeichnet, die dem Benutzer zugewandt ist, wenn das Lager an einem Uhrenteil befestigt ist,
- und bei dem die sichtbare Seite des Dämpfers (1035, 2037) mit der sichtbaren Seite des Zwischenrings (1032, 2032) entlang einer senkrecht zur Achse A verlaufenden Achse B fluchtet.

8. Lager (1, 100, 200, 300, 400) einem der Ansprüche 1 bis 7, bei dem
- das Lager eine Rotationsachse A aufweist,
- der Dämpfer (111, 211, 311, 411, 1011, 2011) eine Basis (124, 224, 324, 424, 1024, 2024) und einen Vorsprung (125, 225, 325, 425, 1025, 2025) umfasst, wobei sich der Vorsprung (125, 225, 325, 425, 1025, 2025) von der Basis aus (124, 224, 324, 424, 1024, 2024) entlang der Achse A erstreckt, wobei die Basis (124, 224, 324, 424, 1024, 2024) zwischen dem Mittelring (110, 210, 310, 410, 1010, 2010) und dem Zwischenring (104, 204, 304, 404, 1004, 2004) gehalten wird, wobei der Vorsprung (125, 225, 325, 425, 1025, 2025) nur mit dem Zwischenring (104, 204, 304, 404, 1004, 2004) in Kontakt ist.

9. Lager (1, 100, 200, 300, 400) nach Anspruch 8, bei dem
- der Dämpfer (11, 111, 211, 311, 411, 1011, 2011) eine Innenwand und eine Außenwand umfasst, wobei die Innenwand der Außenwand des Mittelrings (15, 115, 215, 315, 415) zugewandt ist, wobei die Außenwand der Innenwand des Zwischenrings (12, 112, 212, 312, 412) zugewandt ist,
- wobei die Innenwand des Vorsprungs des Dämpfers mit der Außenwand des Mittelrings entlang einer parallel zur Achse A verlaufenden Achse C fluchtet.

10. Verfahren zur Herstellung eines Uhrenlagers nach einem der Ansprüche 1 bis 9, wobei das Verfahren umfasst:
- Bereitstellen eines Innenrings, der einen Mittelring (10, 110, 210, 310, 410, 1010, 2010) und einen Zwischenring (4, 104, 204, 304, 404, 1004, 2004) umfasst, wobei der Mittelring und der Zwischenring jeweils eine sichtbare Seite (1030, 1032, 2030, 2032) und entgegengesetzt zur sichtbaren Seite eine Auflageseite (1031, 1033, 2031, 2033) besitzen, wobei die sichtbare Seite die Seite bezeichnet, die dem Benutzer zugewandt ist, wenn das Lager an einem Uhrenteil befestigt ist,
- Bereitstellen eines Formwerkzeugs (1000, 2000) zum Bilden eines Dämpfers (11, 111, 211, 311, 411, 1011, 2011) zwischen dem Mittelring (10, 110, 210, 310, 410, 1010, 2010) und dem Zwischenring (4, 104, 204, 304, 404, 1004, 2004), wobei das Formwerkzeug (1000, 2000) einen oberen Teil (1002, 2002) und entgegengesetzt zu dem oberen Teil einen unteren Teil (1001, 2001) umfasst, wobei der untere Teil eine Einspritzdüse (1003, 2003) zum Einspritzen von Material zwischen den oberen Teil und den unteren Teil des Formwerkzeugs umfasst;
- Aufnehmen des Mittelrings und des Zwischenrings zwischen dem oberen Teil und dem unteren Teil des Formwerkzeugs unter Beibehaltung eines Raums (1034, 2034) zwischen der Innenwand des Zwischenrings (1012, 2012) und der Außenwand des Mittelrings (1015, 2015) zum Bilden des Dämpfers (1011, 2011), wobei der Raum der Einspritzdüse (1003, 2003) zugewandt positioniert ist, wobei der Mittelring und der Zwischenring in dem Formwerkzeug so blockiert sind, dass ein dichter Kontakt zwischen einerseits dem unteren Teil (1002, 2002) des Formwerkzeugs und den sichtbaren Seiten (1030, 1032, 2030, 2032) des Mittel- und Zwischenrings und zwischen andererseits dem unteren Teil (1001, 2001) des Formwerkzeugs und den Auflageseiten (1031, 1033, 2031, 2033) des Mittel- und Zwischenrings gewährleistet ist;
- Einspritzen von Material von der Einspritzdüse aus in den Raum zum Bilden des Dämpfers (1011, 2011).

11. Verfahren nach Anspruch 10, bei dem das Lager eine Rotationsachse A aufweist, wobei das Verfahren umfasst:
- Bereitstellen eines Formwerkzeugs (2000), dessen oberer Teil (2001) einen unbeweglichen Abschnitt (2035) und einen beweglichen Abschnitt (2036) umfasst;
- Halten einerseits des Mittelrings (2010) zwischen dem unbeweglichen Abschnitt (2035) und dem unteren Teil (2002) des Formwerkzeugs und andererseits des Zwischenrings (2004) zwischen dem beweglichen Abschnitt (2036) und dem unteren Teil (2002) des Formwerkzeugs, wobei die Außenwand des unbeweglichen Abschnitts mit der Außenwand des Mittelrings (2015) fluchtet, wobei die Innenwand des beweglichen Teils an der Außenwand des unbeweglichen Teils anliegt, so dass ein dichter Kontakt zwischen dem unbeweglichen Abschnitt und dem beweglichen Abschnitt gewährleistet ist.

12. Verfahren nach einem der Ansprüche 10 oder 11, wobei das Verfahren umfasst:
- Bereitstellen eines Formwerkzeugs, dessen unterer Teil (1001, 2001) einen Hohlraum (1039, 2039) umfasst, der dazu eingerichtet ist, einen Dämpfer zu bilden, der eine Überdicke mit komplementär zum Hohlraum ausgebildeter Form aufweist.

13. Schwungmassenaufhängung mit einem Kugellager (1) nach einem der Ansprüche 1 bis 9 und einer Schwungmasse.

14. Uhrwerk für eine Automatikuhr mit einer Aufhängung nach dem vorhergehenden Anspruch.

## Claims

1. Timepiece ball bearing (1, 100, 200, 300, 400), the bearing comprising a plurality of balls (6, 106, 206, 306, 406), an inner ring fitted in an outer ring (5, 105, 205, 305, 405), said balls (6, 106, 206, 306, 406) being housed between the inner ring and the outer ring (5, 105, 205, 305, 405), the inside diameter of the bearing being between 0 mm and 50 mm and the outside diameter of the bearing being between 1 mm and 50 mm,
the inner ring having two concentric parts denoted first part and second part, said first part forming an intermediate ring (4, 104, 204, 304, 404, 1004, 2004), said second part forming a central ring (10, 110, 210, 310, 410, 1010, 2010), an annular vibration damper (11, 111, 211, 311, 411, 1011, 2011) being housed between these two parts,
**characterized in that** the central ring (10, 110, 210, 310, 410, 1010, 2010), the annular vibration damper (11, 111, 211, 311, 411, 1011, 2011), the outer ring (5, 105, 205, 305, 405) and intermediate ring (4, 104, 204, 304, 404, 1004, 2004) and the balls (6, 106, 206, 306, 406) of said ball bearing being secured together and forming a one-piece assembly, the annular vibration damper preventing withdrawal of the intermediate ring (4, 104, 204, 304, 404, 1004, 2004) and the central ring (10, 110, 210, 310, 410, 1010, 2010).

2. Bearing (1, 100, 200, 300, 400) according to Claim 1, wherein the distance between the external wall (15, 215, 315, 415) of the central ring and the internal wall (12, 112, 212, 312, 412) of the intermediate ring is greater than or equal to 10 micrometres.

3. Bearing (1, 100, 200, 300, 400) according to either of Claims 1 and 2, wherein the damper (11, 111, 211, 311, 411, 1011, 2011) is cast or injection overmoulded between the central ring (10, 110, 210, 310, 410, 1010, 2010) and the intermediate ring (4, 104, 204, 304, 404, 1004, 2004) .

4. Bearing (1, 100, 200, 300, 400) according to one of Claims 1 to 3, wherein the external wall (15, 115, 215, 315, 415) of the central ring and the internal wall (12, 112, 212, 312, 412) of the intermediate ring each comprise at least one groove (16, 17, 116, 117, 216, 217, 316, 317, 416, 417) facing one another to delimit a housing (18, 118, 218, 318, 418, 1018, 2018) in which said damper (11, 111, 211, 311, 411, 1011, 2011) is housed.

5. Bearing (1, 100, 200, 300, 400) according to one of Claims 1 to 4, wherein the damper (11, 111, 211, 311, 411, 1011, 2011) is made from a material chosen from elastomeric polymers, preferably rubber, for example EPDM rubbers, plastics materials, preferably thermoplastic materials, epoxy resins, polyurethane resins.

6. Bearing (1, 100, 200, 300, 400) according to one of Claims 1 to 5, wherein
- the bearing has an axis of rotation A,
- the central ring (10, 110, 210, 310, 410, 1010, 2010), the intermediate ring (4, 104, 204, 304, 404, 1004, 2004) and the damper (11, 111, 211, 311, 411, 1011, 2011) each have a visible face (1030, 1032, 1035, 2030, 2032, 2037) and a contact face (1031, 1033, 1036, 2031, 2033, 2038) on the opposite side from said visible face, the visible face denoting the face that faces the user when the bearing is fixed to a timepiece,
- the damper (11, 111, 211, 311, 411, 1011, 2011) comprises an overthickness (126, 226, 1026, 2026) on the contact face, such that the contact face (2038) of the damper (2011) is offset with respect to the contact face (2031) of the central ring and the contact face (2033) of the intermediate ring along the axis A, the overthickness (126, 226, 1026, 2026) preferably representing between 0.1% and 0.5% of the thickness of the damper along the axis A.

7. Bearing (1, 100, 200, 300, 400) according to one of Claims 1 to 6, wherein
- the bearing has an axis of rotation A,
- the central ring (10, 110, 210, 310, 410, 1010, 2010), the intermediate ring (4, 104, 204, 304, 404, 1004, 2004) and the damper (11, 111, 211, 311, 411, 1011, 2011) each have a visible face (1030, 1032, 1035, 2030, 2032, 2037) and a contact face (1031, 1033, 1036, 2031, 2033, 2038) on the opposite side from said visible face, the visible face denoting the face that faces the user when the bearing is fixed to a timepiece,
- and wherein the visible face (1035, 2037) of the damper is aligned with the visible face (1032, 2032) of the intermediate ring along an axis B perpendicular to the axis A.

8. Bearing (1, 100, 200, 300, 400) according to one of Claims 1 to 7, wherein
- the bearing has an axis of rotation A,
- the damper (111, 211, 311, 411, 1011, 2011) comprises a base (124, 224, 324, 424, 1024, 2024) and a protrusion (125, 225, 325, 425, 1025, 2025), the protrusion (125, 225, 325, 425, 1025, 2025) extending from the base (124, 224, 324, 424, 1024, 2024) along the axis A, the base (124, 224, 324, 424, 1024, 2024) being held between the central ring (110, 210, 310, 410, 1010, 2010) and the intermediate ring (104, 204, 304, 404, 1004, 2004), the protrusion (125, 225, 325, 425, 1025, 2025) being in contact only with the intermediate ring (104, 204, 304, 404, 1004, 2004).

9. Bearing (1, 100, 200, 300, 400) according to Claim 8, wherein
- the damper (11, 111, 211, 311, 411, 1011, 2011) comprises an internal wall and an external wall, the internal wall facing the external wall (15, 115, 215, 315, 415) of the central ring, the external wall facing the internal wall (12, 112, 212, 312, 412) of the intermediate ring,
- the internal wall of the protrusion of the damper being aligned with the external wall of the central ring along an axis C parallel to the axis A.

10. Method for manufacturing a timepiece bearing according to one of Claims 1 to 9, the method comprising:
- providing an inner ring comprising a central ring (10, 110, 210, 310, 410, 1010, 210) and an intermediate ring (4, 104, 204, 304, 404, 1004, 2004), the central ring and the intermediate ring each having a visible face (1030, 1032, 2030, 2032) and a contact face (1031, 1033, 2031, 2033) on the opposite side from said visible face, the visible face denoting the face the faces the user when the bearing is fixed to a timepiece;
- providing a mould (1000, 2000) for forming a damper (11, 111, 211, 311, 411, 1011, 2011) between the central ring (10, 110, 210, 310, 410, 1010, 2010) and the intermediate ring (4, 104, 204, 304, 404, 1004, 2004), the mould (1000, 2000) comprising an upper part (1002, 2002) and a lower part (1001, 2001) opposite said upper part, the lower part comprising an injector (1003, 2003) for injecting material between the upper part and the lower part of the mould;
- housing the central ring and the intermediate ring between the upper part and the lower part of the mould, maintaining a space (1034, 2034) between the internal wall (1012, 2012) of the intermediate ring and the external wall (1015, 2015) of the central ring in order to form the damper (1011, 2011), said space between positioned facing the injector (1003, 2003), the central ring and the intermediate ring being wedged in the mould so as to ensure sealed contact between the lower part (1002, 2002) of the mould and the visible faces (1030, 1032, 2030, 2032) of the central ring and intermediate ring, for the one part, and between the lower part (1001, 2001) of the mould and the contact faces (1031, 1033, 2031, 2033) of the central ring and intermediate ring, for the other part;
- injecting material from the injector into said space in order to form the damper (1011, 2011).

11. Method according to Claim 10, wherein the bearing has an axis of rotation A, the method comprising:
- providing a mould (2000), the upper part (2001) of which comprises a fixed portion (2035) and a mobile portion (2036);
- keeping the central ring (2010) between the fixed portion (2035) and the lower part (2002) of the mould, for the one part, and the intermediate ring (2004) between the mobile part (2036) and the lower part (2002) of the mould, for the other part, the external wall of the fixed portion being aligned with the external wall of the central ring (2015), the internal wall of the mobile part being in contact with the external wall of the fixed part so as to ensure sealed contact between the fixed portion and the mobile portion.

12. Method according to either of Claims 10 and 11, wherein the method comprises:
- providing a mould, the lower part (1001, 2001) of which comprises a cavity (1039, 2039) arranged so as to form a damper having an overthickness with a shape complementary to said cavity.

13. Oscillating-weight suspension comprising a ball bearing (1) according to one of Claims 1 to 9 and an oscillating weight.

14. Automatic watch movement comprising a suspension according to the preceding claim.
